(19) Europäisches Patentamt
European Patent Office
Office européen des brevets

(11) **EP 3 863 777 B1**

(12) **EUROPÄISCHE PATENTSCHRIFT**

(45) Veröffentlichungstag und Bekanntmachung des Hinweises auf die Patenterteilung:
**29.03.2023 Patentblatt 2023/13**

(21) Anmeldenummer: **19787192.4**

(22) Anmeldetag: **10.10.2019**

(51) Internationale Patentklassifikation (IPC):
**B21B 17/14** (2006.01)   **B21B 37/78** (2006.01)

(52) Gemeinsame Patentklassifikation (CPC):
**B21B 37/78; B21B 17/14; G05D 5/02; B21B 38/04;**
**B21B 2261/04; B21B 2275/04**

(86) Internationale Anmeldenummer:
**PCT/EP2019/077431**

(87) Internationale Veröffentlichungsnummer:
**WO 2020/074620 (16.04.2020 Gazette 2020/16)**

(54) **WANDDICKENKONTROLLE BEIM STRECKREDUZIEREN VON ROHREN**

WALL THICKNESS MONITORING WHILE STRETCH-REDUCING TUBES

CONTRÔLE DES ÉPAISSEURS DE PAROI LORS DE LA RÉDUCTION PAR ÉTIREMENT DE TUBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2018 DE 102018217378**

(43) Veröffentlichungstag der Anmeldung:
**18.08.2021 Patentblatt 2021/33**

(73) Patentinhaber: **SMS Group GmbH**
**40237 Düsseldorf (DE)**

(72) Erfinder:
• **GOHR, Alexander**
**41061 Mönchengladbach (DE)**

• **THIEVEN, Peter**
**52074 Aachen (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
DE-A1- 2 947 233   DE-A1- 3 643 659
DE-A1- 3 819 571   DE-A1- 4 039 741

## Beschreibung

Technisches Gebiet

Die Erfindung betrifft eine Steuereinrichtung sowie ein Verfahren zum Steuern eines Streckreduzierwalzwerks für das Walzen von Rohren, das mehrere in einer Förderrichtung der Rohre hintereinander angeordnete Walzgerüste und ein auslaufseitig angeordnetes Wanddickenmessgerät aufweist.

Hintergrund der Erfindung

Bei der Herstellung nahtloser Rohre kommt ein Streckreduzierwalzwerk zum Einsatz, das mehrere in Förderrichtung des Rohrs hintereinander angeordnete Walzgerüste aufweist. Mit der Reduktion des Rohrdurchmessers von Gerüst zu Gerüst geht eine Streckung des Rohres in Axialrichtung und damit eine Zunahme der Materialgeschwindigkeit des Rohres in Walzrichtung einher. Entsprechend müssen auch die Walzendrehzahlen in Walz- oder Förderrichtung von Gerüst zu Gerüst zunehmen. Die Durchmesserreduktion ist auch mit einer Veränderung der Rohrwanddicke verbunden. Bei großen Drehzahldifferenzen zwischen benachbarten Gerüsten kann die Streckung so stark werden, dass die Rohrwanddicke verringert wird. Bei kleinen Drehzahldifferenzen kann umgekehrt die Rohrwanddicke zunehmen.

Unter anderem aufgrund von Schwankungen der Wanddicke des in das Streckreduzierwalzwerk einlaufenden Walzguts kann auch das gewalzte, aus dem Streckreduzierwalzwerk austretende Walzgut Schwankungen der Wanddicke aufweisen. Ursächlich für derartige Schwankungen sind beispielsweise inhomogene Walzbedingungen, wie etwa Änderungen der Walztemperatur, ungleichmäßige Abnutzung von Werkzeugen, die sich in Voraggregaten im Umlauf befinden, usw.. Streckreduzierwalzwerke können aus diesem Grund mit Regelungssystemen zur Steuerung der auslaufenden Wanddicke bzw. Verbesserung der Toleranz ausgestattet sein.

Eine bekannte technische Lösung besteht darin, durch eine gezielte Drehzahländerung der Walzgerüste die Streckung des zu walzenden Rohrs zu beeinflussen. Wird beispielsweise ein Abschnitt des einlaufenden Rohrs mit einer relativ zu einem Sollwert zu dicken Wand gewalzt, so können durch eine steilere Drehzahlkurve, d.h. steigende Drehzahldifferenzen zwischen benachbarten Walzgerüsten, die Streckung erhöht und damit die Wanddicke stärker reduziert werden. Wird im anderen Fall ein Abschnitt mit einer relativ zu einem Sollwert zu dünnen Wand gewalzt, dann kann durch eine flachere Drehzahlkurve die momentane Streckung im Streckreduzierwalzwerk verringert werden. Auf diese Weise finden eine Kompensation von Wanddickenschwankungen des einlaufenden Rohrs, somit eine Vergleichmäßigung der Wanddicke des auslaufenden Rohrs und eine Verbesserung der Walzqualität statt.

Die bekannten Geschwindigkeitsregelungen der Walzgerüste zur Kompensation von Wanddickenschwankungen des Eingangsrohres erforderen eine Messstation zur Erfassung der Wanddicke des in das Streckreduzierwalzwerk einlaufenden Rohrs. So beschreibt die DE 29 47 233 A1 eine Verstelleinrichtung zum Regeln des Gesamtdickengrades eines Streckreduzierwalzwerks. Einlaufseitig ist eine Wanddickenmesseinrichtung, etwa ein Isotopen-Strahlungsmessgerät, vorgesehen. Eine ähnliche Technik ist aus der US 3,496,745 A bekannt. Beide nutzen eine einlaufseitige radiometrische Wanddickenmessung, mittels der ein Regelkreis aufgebaut oder eine Vorsteuerung der Drehzahlen der Walzgerüste durchgeführt wird. In der Praxis ist neben der einlaufseitigen Wanddickenmessung auch eine auslaufseitige Wanddickenmessung zur Erfolgskontrolle der Wanddickenregelung erforderlich. Die auslaufseitige Wanddickenmessung ist zusätzlich auch noch zur korrekten Erfassung der verdickten Rohrenden notwendig.

Auch aus der DE 38 19 571 A1, die die Basis für den Oberbegriff der Ansprüche 1 und 10 bildet, ist ein Verfahren zur Regelung der Wanddicke beim Streckreduzieren von Rohren bekannt. Auf der Einlaufseite werden das Gewicht und die Einlauflänge des Rohrs gemessen. Daraus kann über das spezifische Gewicht die mittlere Wanddicke des einlaufenden Rohres errechnet werden.

Mit der Bereitstellung eines einlaufseitigen und auslaufseitigen Wanddickenmessgeräts sind hohe Anschaffungs- und Betriebskosten verbunden. Hinzu kommen betriebliche Probleme und Sicherheitsaspekte, insbesondere bei der Verwendung radiometrischer Messgeräte, die stark radioaktive Strahlungsquellen nutzen. Dies führt dazu, dass Streckreduzierwalzwerke in der Praxis oftmals auf die kontinuierliche Wanddickenmessung verzichten und somit keine lokale Wanddickensteuerung realisieren können.

Darstellung der Erfindung

Eine Aufgabe der Erfindung besteht darin, die Wanddickensteuerung im Streckreduzierwalzwerk zu verbessern.

Gelöst wird die Aufgabe mit einer Steuereinrichtung mit den Merkmalen des Anspruchs 1, sowie einem Verfahren mit den Merkmalen des Anspruchs 10. Vorteilhafte Weiterbildungen folgen aus den Unteransprüchen, der folgenden Darstellung der Erfindung sowie der Beschreibung bevorzugter Ausführungsbeispiele.

Die erfindungsgemäße Steuereinrichtung dient zum Steuern eines Streckreduzierwalzwerks, das für das Walzen von Rohren ausgelegt ist. Die Rohre sind vorzugsweise nahtlose, zylindrische Rohre aus einem Metallmaterial. Das Streckreduzierwalzwerk weist mehrere in einer Förderrichtung der Rohre hintereinander angeordnete Walzgerüste auf. Ein zu walzendes Rohr, das in das Streckreduzierwalzwerk eintritt, durchläuft die Walzgerüste, wodurch mit einer geeigneten Drehzahlkurve eine Streckung des Rohrs in Längsrichtung und eine Veränderung der Rohrwanddicke erfolgt. Das Streckreduzierwalzwerk weist ferner zumindest ein auslaufseitiges Wanddickenmessgerät auf, das eingerichtet ist, um Wanddicken der aus dem letzten Walzgerüst austretenden Rohre, die hierin auch als "auslaufseitige Wanddicken" bezeichnet werden, zu messen. Die Bezeichnungen "vor" und "hinter" beziehen sich hierbei und im Folgenden auf die Förderrichtung der Rohre, sofern nichts anderes beschrieben ist. Das auslaufseitige Wanddickenmessgerät dient somit dazu, Wanddicken des gewalzten Rohrs zu messen. Zu diesem Zweck ist das auslaufseitige Wanddickenmessgerät vorzugsweise unmittelbar oder zumindest so nah wie möglich hinter dem letzten Walzgerüst angeordnet. Die Messung erfolgt vorzugsweise berührungsfrei. Sie kann auf einem radiometrischen Prinzip beruhen. So kann das auslaufseitige Wanddickenmessgerät einen Strahler, beispielsweise einen Cäsium-Strahler, und einen Detektor aufweisen, die so eingerichtet sind, dass die Schwächung der vom Strahler ausgesandten Strahlung nach Durchtritt durch einen Rohrquerschnitt (senkrecht zur Längsrichtung) vom Detektor gemessen wird. Allerdings kann die auslaufseitige Wanddicke des Rohrs auch auf andere Weise gemessen werden. Umfasst sind hierbei insbesondere auch indirekte Messverfahren, bei denen die Wanddicke nicht direkt gemessen wird, sondern ein oder mehrere andere physikalische Parameter gemessen werden, aus denen die Wanddicke berechenbar ist.

Die Steuereinrichtung ist erfindungsgemäß eingerichtet, um Messdaten, die eine oder mehrere auslaufseitige Wanddicken eines aus dem letzten Walzgerüst auslaufenden Rohrs kennzeichnen, vom Wanddickenmessgerät zu empfangen. Die Übermittlung der Messdaten erfolgt vorzugsweise elektronisch, etwa digital mittels eines Kabels oder drahtlos. Die Messdaten können die Wanddicken in einer geeigneten physikalischen Einheit repräsentieren oder alternativ Informationen umfassen, aus denen von der Steuereinrichtung auf die Wanddicken geschlossen werden kann. Vorzugsweise umfassen die Messdaten mehrere lokale Wanddicken, d.h. mehrere Wanddicken ein- und desselben Rohrs entlang seiner Längserstreckung. Ein Satz mehrerer Wanddicken als Funktion des lokalen Orts bzw. der lokalen axialen Position des Rohrs wird im Folgenden auch als "Wanddickenprofil" bezeichnet. Das Wanddickenprofil kann hierbei auf verschiedene Weise dargestellt und/oder intern repräsentiert werden, etwa diskret, quasi-kontinuierlich oder kontinuierlich (beispielsweise mittels einer stetigen, differenzierbaren Funktion). Indem mehrere auslaufseitige Wanddicken des Rohrs, das mit einer bestimmten Geschwindigkeit aus dem letzten Walzgerüst austrat, taktweise oder auf andere Weise als Funktion der Zeit gemessen werden, kann im Wanddickenmessgerät oder in der Steuereinrichtung ein Wanddickenprofil des gewalzten Rohrs erstellt werden.

Die Steuereinrichtung ist ferner eingerichtet, um aus den empfangenen Messdaten eine oder mehrere einlaufseitige Wanddicken zu ermitteln. Dies kann dadurch erfolgen, dass die auslaufseitig gemessenen Wanddicken als Anfangsbedingungen einer Modellrechnung, etwa einer Stoffflusssimulation, dienen oder auf andere Weise, vorzugsweise iterativ, rückgerechnet werden. Die so ermittelten theoretischen einlaufseitigen Wanddicken müssen nicht exakt mit den tatsächlichen einlaufseitigen Wanddicken übereinstimmen. Es genügt, wenn ihre Anwendung (weiter unten beschrieben) zu einer Verbesserung der Walzqualität, insbesondere zu einer Vergleichmäßigung des auslaufseitigen Wanddickenprofils führt. Aus den einlaufseitigen theoretisch hergeleiteten Wanddicken kann - wie oben in Bezug auf die gemessenen auslaufseitigen Wanddicken beschrieben - von der Steuereirichtung ein theoretisches einlaufseitiges Wanddickenprofil ermittelt oder berechnet werden.

Die Steuereinrichtung ist ferner eingerichtet, um ein oder mehrere der Walzgerüste unter Berücksichtigung der theoretischen einlaufseitigen Wanddicken zu steuern. Zu diesem Zweck gibt die Steuereinrichtung vorzugsweise elektronische Signale oder Befehle, drahtlos oder über Kabel, an die Walzgerüste aus. Die Walzgerüste sind vorzugsweise einzeln ansteuerbar bzw. regelbar, sie können jedoch auch gruppenweise ansteuerbar sein. Die Bezeichnungen "ansteuern", "regeln" usw. umfassen hierbei insbesondere die Steuerung der Drehzahl von Arbeitswalzen der Walzgerüste, wobei jedoch auch die Steuerung weiterer oder anderer Walzparameter umfasst sein kann, wie etwa der Walzdruck, die Anstellung von Arbeitswalzen usw..

Die vorgeschlagene technische Lösung, die auf einer Rückrechnung der einlaufseitigen Rohrwanddicke(n) aus gemessenen auslaufseitigen Rohrwanddicke(n) beruht, bietet einen Kompromiss zwischen den Investitions- und Betriebskosten des Streckreduzierwalzwerks und der Verbesserung der Walzgenauigkeit durch Berücksichtigung einlaufseitiger Wanddickenschwankungen. Die Erfindung ermöglicht eine Verringerung der Messtechnikanforderungen, ohne auf eine Steuerung auf der Grundlage einlaufseitiger Wanddicken verzichten zu müssen. Auf diese Weise kann eine herkömmliche Lokalwanddickensteuerung des Streckreduzierwalzwerks verwendet werden, wobei anstelle gemessener einlaufseitiger Wanddicken die rückgerechneten Wanddicken als Eingangssignale verwendet werden. Es sei darauf hingewiesen, dass eine Rückrechnung auch dann sinnvoll ist, wenn technische Mittel für eine einlaufseitige Wanddickenmessung vorhanden sind. Einerseits lassen sich in diesem Fall Störungssituationen bei einem etwaigen Ausfall der einlaufseitigen Wanddickenmessung überbrücken, ohne dass der Betrieb der Anlage unterbrochen oder eingestellt werden muss. Andererseits kann aus einem Vergleich zwischen den rückgerechneten und einlaufseitig gemessenen Rohrwanddicken eine Anpassung des Steuerungsmodells und/oder eine Störungsdetektion vorgenommen werden. Bei korrekter Funktion des Steuerungsmodells bzw. der Steuereinrichtung muss nämlich der vom Steuerungsmodell für ein bestimmtes einlaufseitiges Wanddickenprofil ermittelte Drehzahlverlauf in einer Umkehrberechnung dazu verwendbar sein, aus dem auslaufseitigen Wanddickenverlauf wieder die einlaufseitige Wanddicke oder das einlaufseitige Wanddickenprofil zu ermitteln. Eine größere Differenz zwischen tatsächlichem einlaufseitigen Wanddickenprofil und rückgerechtem einlaufseitigen Wanddickenprofil weist auf Fehler im Steuerungssystem hin.

Vorzugsweise ist die Steuereinrichtung eingerichtet, um aus den theoretisch ermittelten einlaufseitigen Wanddicken eine Abweichung von einem oder mehreren Sollwerten zu bestimmen. Aus der Abweichung lässt sich eine Korrektur der Arbeitsparameter der Walzgerüste vornehmen, um so eine dynamische Wanddickensteuerung zu erzielen.

Vorzugsweise umfasst die Steuerung des einen oder der mehreren Walzgerüste zumindest eine Drehzahlregulierung und/oder Drehzahlkorrektur von Arbeitswalzen derselben. Wird beispielsweise ein Abschnitt des einlaufenden Rohrs gewalzt, dessen Wanddicke gemäß Rückrechnung größer als ein Sollwert ist oder angenommen wird, so können durch eine steilere Drehzahlkurve, d.h. steigende Drehzahldifferenzen zwischen benachbarten Walzgerüsten, die Streckung erhöht und damit die Wanddicke stärker reduziert werden. Wird im anderen Fall ein Abschnitt gewalzt, dessen Wanddicke gemäß Rückrechnung kleiner als ein Sollwert ist oder angenommen wird, kann durch eine flachere Drehzahlkurve die momentane Streckung im Streckreduzierwalzwerk verringert werden. Auf diese Weise findet eine Kompensation von Wanddickenschwankungen am einlaufenden Rohr und somit eine Vergleichmäßigung der Wanddicke des auslaufenden Rohrs statt.

Vorzugsweise ist die Steuereinrichtung eingerichtet, um die theoretisch ermittelten einlaufseitigen Wanddicken für die Wanddickensteuerung eines oder mehrerer nachfolgender Rohre zu verwenden. Die Bezeichnung "nachfolgend" ist hierbei relativ zu dem Rohr (analog mehrere Rohre) zu sehen, das Grundlage für die Rückrechnung war. Im einfachsten Fall wird beispielsweise das rückgerechnete Rohrwanddickenprofil oder ein Mittelwert aus mehreren berechneten Rohrwanddickenprofilen als Näherung für das tatsächliche Rohrwanddickenprofil eines nachfolgenden Rohres angenommen. Mit diesem theoretischen Profil als Grundlage bzw. als Eingabe erfolgt die dynamische Drehzahlkorrektur der Walzgerüste.

Vorzugsweise ist die Steuereinrichtung eingerichtet, um aus den theoretisch ermittelten einlaufseitigen Wanddicken eine Prognose über die Wanddicken, vorzugsweise das Wanddickenprofil, nachfolgender Rohre zu erstellen. So kann die Erstellung der Prognose etwa eine Analyse auf zyklisch wiederkehrende und/oder statistische Regelmäßigkeiten umfassen. Beispielsweise können ähnliche Wanddickenabweichungen an äquivalenten Stellen in aufeinanderfolgenden Rohren auftreten, oder Wanddickenprofile wiederholen sich nach einer gewissen Anzahl von Rohren. Aus diesen Gründen ist die Steuereinrichtung vorzugsweise eingerichtet, um die berechneten einlaufseitigen Rohrwandprofile auf derartige Charakteristika - etwa Eigenschaften, die allen Rohren gemeinsam sind oder periodisch wiederkehren - zu untersuchen und daraus das Wanddickenprofil nachfolgender Rohre zu prognostizieren. Auf diese Weise lässt sich die Genauigkeit der berechneten eingangsseitigen Wanddickenprofile verbessern. Ausgehend von diesem bevorzugten Ausführungsbeispiel kann es sinnvoll sein, wenn die Steuereinrichtung mit der Drehzahlkorrektur der Walzgerüste erst dann beginnt, wenn diese Gesetzmäßigkeiten im Rohrwanddickenprofil und/oder über die Anzahl von im Umlauf befindlichen Werkzeugen von Voraggregaten mit einer bestimmten Sicherheit erkannt hat. Erkannte Muster und systematische Fehler können auch dem Walzwerksbediener gemeldet werden, um etwaige Problematiken in vorangehenden Aggregaten im Streckreduzierwalzwerk identifizieren zu können.

Vorzugsweise ist die Steuereinrichtung ferner eingerichtet, um die theoretisch ermittelten einlaufseitigen Rohrwanddicken mit den gemessenen auslaufseitigen Rohrwanddicken zu vergleichen. Durch einen solchen Vergleich kann einerseits eine Plausibilitätsprüfung der Rückrechnung bzw. Prognose und andererseits eine adaptive Korrektur am Steuerungsverhalten der Steuereinrichtung vorgenommen werden, um das Walzergebnis weiter zu optimieren.

Eine weitere Verbesserung der Prognosequalität und/oder Walzqualität kann erzielt werden, wenn das berechnete einlaufseitige Rohrwanddickenprofil um einen gemessenen einlaufseitigen Wanddickenmittelwert korrigiert wird. Ein solcher Wanddickenmittelwert kann beispielsweise durch Messung des Gewichts, der Länge und/oder des Durchmessers des einlaufenden Rohrs, somit technisch vergleichsweise einfach und preiswert, ermittelt werden.

Vorzugsweise weist das Streckreduzierwalzwerk ferner ein einlaufseitiges Wanddickenmessgerät auf, das eingerichtet ist, um einlaufseitige Wanddicken von in das erste Walzgerüst eintretenden Rohren zu messen, wobei die Steuereinrichtung in diesem Fall eingerichtet ist, um die gemessenen einlaufseitigen Wanddicken mit den theoretisch ermittelten einlaufseitigen Wanddicken zu vergleichen. Gemäß diesem bevorzugten Ausführungsbeispiel ist somit ein Wanddickenmessgerät vor dem ersten Walzgerüst angeordnet. Einerseits lassen sich in diesem Fall Störungssituationen bei einem etwaigen Ausfall der einlaufseitigen Wanddickenmessung überbrücken, ohne dass der Betrieb der Anlage unterbrochen oder eingestellt werden muss. Andererseits kann aus einem Vergleich zwischen den rückgerechneten und einlaufseitig gemessenen Rohrwanddicken eine Anpassung des Steuerungsmodells und/oder eine Störungsdetektion vorgenommen werden.

Ein Streckreduzierwalzwerk zum Walzen von Rohren weist gemäß der Erfindung mehrere in Förderrichtung der Rohre hintereinander angeordnete Walzgerüste, zumindest ein auslaufseitiges Wanddickenmessgerät, das eingerichtet ist, um auslaufseitige Wanddicken von aus dem letzten Walzgerüst austretenden Rohren zu messen, und eine Steuereinrichtung gemäß den oben dargelegten Ausführungsformen auf.

Das erfindungsgemäße Verfahren dient zum Steuern eines Streckreduzierwalzwerks für das Walzen von Rohren, das mehrere in Förderrichtung der Rohre hintereinander angeordnete Walzgerüste und zumindest ein auslaufseitiges Wanddickenmessgerät aufweist, das eingerichtet ist, um auslaufseitige Wanddicken von aus dem letzten Walzgerüst austretenden Rohren zu messen, wobei das Verfahren aufweist: Messen einer oder mehrerer auslaufseitiger Wanddicken eines Rohrs mittels des Wanddickenmessgeräts; theoretisches Ermitteln bzw. Berechnen einer oder mehrerer einlaufseitiger Wanddicken, vorzugsweise eines einlaufseitigen Wanddickenprofils, des Rohrs im Zustand vor dem Eintritt in das erste Walzgerüst aus den gemessenen auslaufseitigen Wanddicken; und Steuern eines oder mehrerer der Walzgerüste unter Berücksichtigung der theoretisch ermittelten einlaufseitigen Wanddicken.

Die Merkmale, technischen Wirkungen, Vorteile sowie Ausführungsbeispiele, die in Bezug auf die Steuereinrichtung sowie das Streckreduzierwalzwerk beschrieben wurden, gelten analog für das Verfahren.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale realisiert werden, insofern sich die Merkmale nicht widersprechen. Die folgende Beschreibung der bevorzugten Ausführungsbeispiele erfolgt mit Bezug auf die begleitende Zeichnung.

Kurze Beschreibung der Figur

Die Figur 1 ist eine schematische Ansicht eines Streckreduzierwalzwerks mit auslaufseitiger Wanddickenmesseinrichtung.

Die Figur 2 ist ein Diagramm, das eine beispielhafte Rohrwanddicke als Funktion der Position in Axialrichtung des Rohrs darstellt, zur Erläuterung eines iterativen Verfahrens zur Berechnung eines einlaufseitigen Rohrwandprofils.

Detaillierte Beschreibung bevorzugter Ausführungsbeispiele

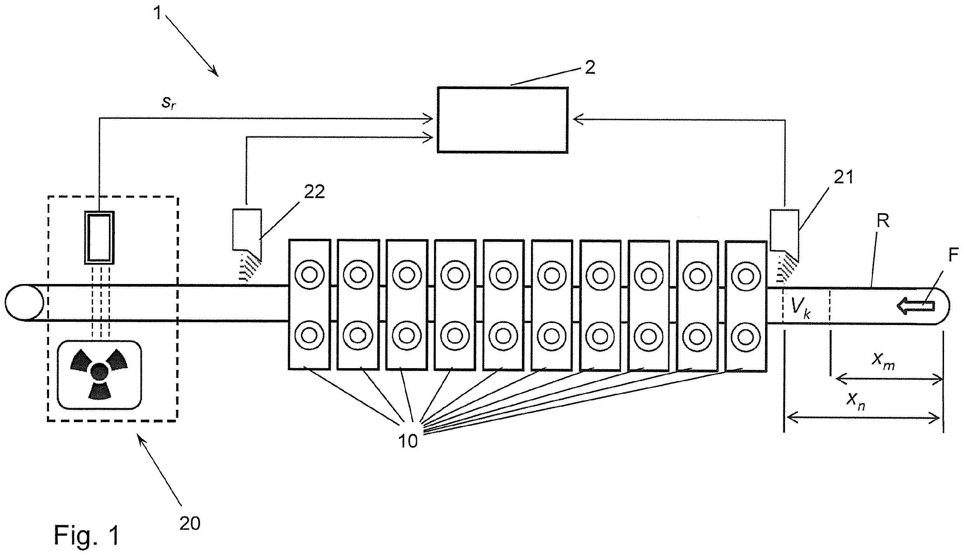

Im Folgenden werden bevorzugte Ausführungsbeispiele anhand der Figur 1 beschrieben.

Die Figur 1 ist eine schematische Ansicht eines Streckreduzierwalzwerks 1. Das Streckreduzierwalzwerk 1 weist mehrere, hier beispielhaft zehn, Walzgerüste 10 auf. Die Walzgerüste 10 sind vorzugsweise einzeln ansteuerbar. Insbesondere sind die Drehzahlen von Arbeitswalzen (in der Figur 1 nicht dargestellt) der Walzgerüste 10 individuell einstellbar.

Die Ansteuerung der Walzgerüste 10 erfolgt über eine Steuereinrichtung 2, vorzugsweise computerbasiert. Die Steuereinrichtung 2 übernimmt ggf. die Ansteuerung weiterer Komponenten des Streckreduzierwalzwerks 1. Es sei darauf hingewiesen, dass die Bezeichnung "Steuereinrichtung" sowohl zentrale als auch dezentrale Strukturen zur Steuerung des Streckreduzierwalzwerks 1 umfasst. Die Steuereinrichtung 2 muss sich demnach nicht am "Ort" des Streckreduzierwalzwerks 1 befinden oder Bestandteil desselben sein. Zudem können Steueraufgaben, Datenverarbeitungsschritte usw. auf verschiedene Recheneinrichtungen verteilt werden, die dann in ihrer Gesamtheit unter die Bezeichnung "Steuereinrichtung" fallen. Ferner kann die Kommunikation der Steuereinrichtung 2 mit den zu steuernden Komponenten sowohl physisch über Kabel als auch drahtlos erfolgen.

Zum Walzen eines Rohrs R läuft dieses in einer Förderrichtung F durch das Streckreduzierwalzwerk 1. Vor dem Eintritt in das Streckreduzierwalzwerk 1 weist das Rohr R eine einlaufseitige Wanddicke $s_l$ auf, die entlang der Längserstreckung des Rohrs R, d.h. lokal, schwanken kann. Beim Austritt aus dem letzten Walzgerüst 10 weist das Rohr R eine veränderte Wanddicke $s_r$ auf.

Die auslaufseitige Wanddicke s, wird mittels eines Wanddickenmessgeräts 20 gemessen, das beispielsweise ein radiometrisches Messgeräte ist. Die Messung erfolgt vorzugsweise berührungslos, beispielsweise dadurch, dass die Schwächung der von einem Strahler, etwa einem Cäsium-Strahler, ausgesandten Strahlung gemessen wird. Allerdings kann die auslaufseitige Wanddicke s, des Rohrs R auch auf andere Weise gemessen werden. Umfasst sind hierbei insbesondere auch indirekte Messverfahren, bei denen die Wanddicke nicht direkt gemessen wird, sondern ein oder mehrere andere physikalische Parameter gemessen werden, aus denen die Wanddicke berechenbar ist.

Zusätzlich zur auslaufseitigen Wanddickenmessung können ggf. weitere Parameter gemessen werden, beispielsweise die einlaufseitige und/oder auslaufseitige Geschwindigkeit des Rohrs R, gemessen mittels der Geschwindigkeitsmessgeräte 21 und 22, das einlaufseitige und/oder auslaufseitige Gewicht des Rohrs R usw.. Derartige technische Mittel sind in der Figur 1 der Übersichtlichkeit halber weggelassen.

Die Messwerte vom Wanddickenmessgerät 20 und der ggf. weiteren Messstationen werden an die Steuereinrichtung 2 übertragen. Die Messungen können hierbei zeitlich im Wesentlichen kontinuierlich oder diskret, d.h. taktweise, durchgeführt werden.

Die gemessenen auslaufseitigen Rohrwanddicken $s_r$ (allgemeiner: das auslaufseitig gemessene Rohrwanddickenprofil) wird von der Steuereinrichtung 2 verwendet, um auf einlaufseitige Rohrwanddicken $s_{l\,t}$ (allgemeiner: das einlaufseitige Rohrwanddickenprofil) theoretisch zu schließen. Eine solche Rückrechnung kann beispielsweise mittels einer Stoffflusssimulation, weiter unten im Detail beschrieben, erfolgen.

Das berechnete bzw. simulierte einlaufseitige Rohrwanddickenprofil wird nun von der Steuereinrichtung 2 als Eingangsgröße für die lokale Wanddickensteuerung nachfolgender Rohre R oder Rohrabschnitte verwendet. Im einfachsten Fall wird beispielsweise das rückgerechnete Rohrwanddickenprofil oder ein Mittelwert aus mehreren berechneten Rohrwanddickenprofilen als Näherung für das tatsächliche Rohrwanddickenprofil angenommen. Mit diesem theoretischen Profil als Grundlage erfolgt die dynamische Drehzahlkorrektur der Walzgerüste 10.

Es hat sich in der Praxis herausgestellt, dass Abweichungen der Rohrwanddicke regelmäßige, insbesondere zyklische oder periodische, Eigenschaften haben können. Beispielsweise können ähnliche Wanddickenabweichungen an äquivalenten Stellen in aufeinanderfolgenden Rohren R auftreten, oder Wanddickenprofile wiederholen sich nach einer gewissen Anzahl von Rohren R. Der erste Fall tritt beispielsweise dann auf, wenn Probleme mit der Erwärmung des Vormaterials, die sich auf die einlaufende Wanddicke $s_l$ des Rohrs R niederschlagen, vorliegen. Der zweite Fall tritt beispielsweise dann auf, wenn einzelne Werkzeuge der Voraggregate, wie etwa Lochstopfen oder Walzstangen, verschlissen oder stärker als andere abgenutzt sind. Da in den Voraggregaten solche Werkzeuge oft im Umlauf eingesetzt werden, tauchen verschlissene Werkzeuge und die durch sie verursachten Wanddickenabweichungen mit einer gewissen Periodizität auf, die der Anzahl der im Umlauf verwendeten Werkzeuge entspricht. Aus diesen Gründen ist die Steuereinrichtung 2 vorzugsweise eingerichtet, um die berechneten einlaufseitigen Rohrwandprofile auf derartige Charakteristika - etwa Charakteristika, die allen Rohren R gemeinsam sind oder periodisch wiederkehren - zu untersuchen und daraus das Wanddickenprofil nachfolgender Rohre R zu prognostizieren. Auf diese Weise lässt sich die Genauigkeit der berechneten Wanddickenprofile verbessern.

Ausgehend von diesem bevorzugten Ausführungsbeispiel kann es sinnvoll sein, wenn die Steuereinrichtung 2 mit der Aufschaltung von Korrekturdrehzahlen für die Walzgerüste 10 erst dann beginnt, wenn diese Gesetzmäßigkeiten im Rohrwanddickenprofil und/oder über die Anzahl der im Umlauf befindlichen Werkzeuge der Voraggregate mit einer bestimmten Sicherheit erkannt hat.

Eine weitere Verbesserung der Prognosequalität kann erzielt werden, wenn das berechnete einlaufseitige Rohrwanddickenprofil um einen gemessenen einlaufseitigen Wanddickenmittelwert korrigiert wird. Ein solcher Wanddickenmittelwert kann beispielsweise durch Messung des Gewichts, der Länge und des Durchmessers des einlaufenden Rohrs R, somit technisch vergleichsweise einfach und preiswert, ermittelt werden.

Gemäß einem weiteren Ausführungsbeispiel kann von der Steuereinrichtung 2 ein Vergleich zwischen den berechneten einlaufseitigen Rohrwanddicken $s_{l\_t}$ und den gemessenen einlaufseitigen Rohrwanddicken $s_l$ durchgeführt werden. Durch einen solchen Vergleich kann einerseits eine Plausibilitätsprüfung der Rückrechnung bzw. Prognose und andererseits eine adaptive Korrektur am Steuerungsverhalten der Steuereinrichtung 2 vorgenommen werden, um das Walzergebnis weiter zu optimieren. Dadurch lassen sich beispielsweise die Einsatzdauern und/oder Beträge der für eine Wanddickenabweichung vorgenommenen Drehzahländerungen der Walzgerüste 10 automatisch anpassen.

Die vorgeschlagene technische Lösung, die auf einer Rückrechnung der einlaufseitigen Rohrwanddicken $s_{l\_t}$ aus den auslaufseitigen Rohrwanddicken s, beruht, bietet einen Kompromiss zwischen Investitions- und Betriebskosten des Streckreduzierwalzwerks und einer Verbesserung der Walzgenauigkeit, die angestrebt wird, indem einlaufseitige Wanddickenschwankungen berücksichtigt werden. Die theoretisch ermittelten einlaufseitigen Wanddicken $s_{l\_t}$ müssen nicht exakt mit den tatsächlichen einlaufseitigen Wanddicken $s_l$ übereinstimmen. Es genügt, wenn ihre Anwendung zu einer Verbesserung der Walzqualität führt.

Die beschriebene Rückrechnung ist auch dann sinnvoll, wenn technische Mittel für eine einlaufseitige Rohrwanddickenmessung vorhanden sind. Einerseits lassen sich in diesem Fall Störungssituationen bei einem etwaigen Ausfall der einlaufseitigen Wanddickenmessung überbrücken, ohne dass der Betrieb der Anlage unterbrochen oder eingestellt werden muss. Andererseits kann aus einem Vergleich zwischen den rückgerechneten und einlaufseitig gemessenen Rohrwanddicken eine Anpassung des Steuerungsmodells und/oder eine Störungsdetektion vorgenommen werden.

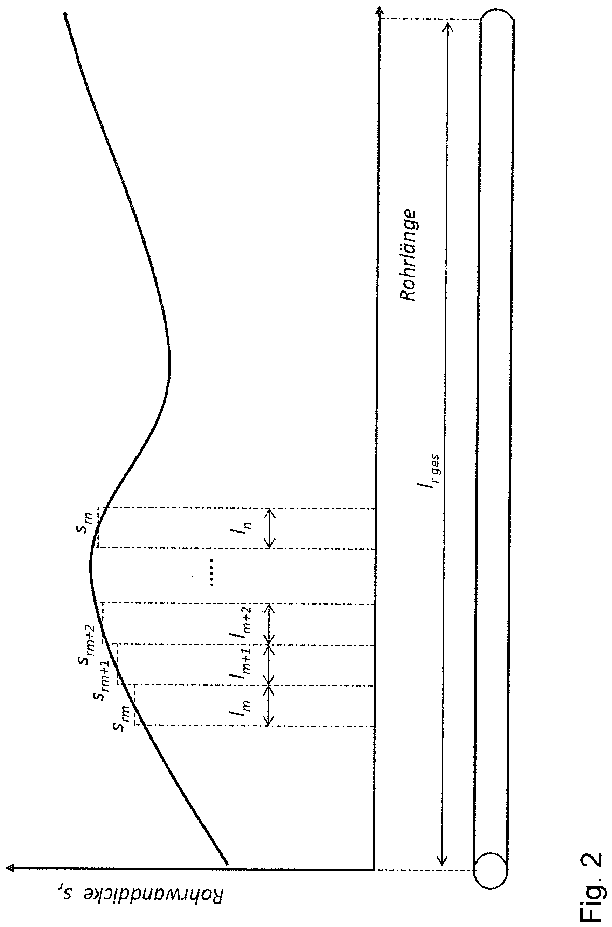

Im Weiteren wird ein Verfahren zur Berechnung eines einlaufseitigen Rohrwandprofils mit Bezug auf die Figur 2 dargelegt. Zu diesem Zweck ist die Steuereinrichtung eingerichtet, um der gemessenen, auslaufseitigen Rohrwanddicke eine einlaufende Rohrwanddicke zuzuordnen. Randbedingungen sind dabei die Drehzahleinstellung der Walzgerüste 10 des Streckreduzierwalzwerkes 1, da diese den Walzzug und die Streckung festlegen. Das einlaufseitige Rohr R wird zur Unterscheidung im weiteren als "Luppe" bezeichnet.

Es sind Rechenverfahren bekannt, mit deren Hilfe man die Drehzahlen eines Streckreduzierwalzwerkes berechnen kann, um aus einer vorgegebenen einlaufseitigen Luppenwanddicke eine gewünschte Rohrwanddicke zu walzen, vgl. beispielsweise: H. Biller, "Das Reduzieren von Rohren, Theorie und Anwendung" in "Herstellung von Rohren", Düsseldorf 1975, Seiten 48 - 63.

Die Rechenverfahren sind umkehrbar, d.h. bei einer vorgegebenen Rohrwanddicke und bekannten Drehzahlen lässt sich die zugehörige einlaufseitige Luppenwanddicke berechnen. Vereinfacht geschrieben wird eine Umkehrfunktion ausgeführt, die aus den Walzendrehzahlen und der Rohrwanddicke die einlaufseitige Luppenwanddicke berechnet:

$$s_l = F^{-1}(n_i, s_r) \qquad (1)$$

Dabei bedeuten $s_l$ die einlaufseitige Wanddicke der Luppe, $n_i$ die Walzendrehzahl des i-ten Walzgerüsts 10 und $s_r$ die auslaufseitige Wanddicke des Rohres R.

Im einfachsten Fall wird die Umkehrfunktion durch Versuch-und-Irrtum gelöst, d.h. durch probeweises Vorgeben einer Luppenwanddicke. Daraus wird eine Drehzahlreihe berechnet, um die Rohrwanddicke aus dieser angenommenen Luppenwanddicke zu erhalten. Sofern die ermittelte Drehzahlen von den Zieldrehzahlen abweichen, variiert man die Luppenwanddicke so lange, bis die gewünschte Drehzahlreihe erreicht ist oder doch zumindest die Abweichungen zwischen Vorgabewerten und berechneter Drehzahlreihe unterhalb einer Fehlerschwelle liegen.

Zur Berechnung des lokalen Wanddickenprofils ist dieses relativ einfache Verfahren jedoch nicht ohne weiteres geeignet. Dies liegt insbesondere daran, dass die Walzendrehzahlen im Streckreduzierwalzwerk 1 in der Regel nicht zeitkonstant sind, sondern zeitlichen Variationen unterworfen werden, um eine gezielte Beeinflussung der Streckung im Streckreduzierwalzwerk 1 zu erreichen, beispielsweise zur Steuerung der Rohrrendenverdickung oder der Lokalwanddickenregelung. Die oben genannte Umkehrung der Drehzahlberechnung ist somit nicht unbedingt unmittelbar durchführbar, ohne möglicherweise große Fehler der berechneten Luppenwanddicke zu erhalten.

Die Berechnung eines Luppenwanddickenprofils aus dem gemessenen Wanddickenprofil eines Rohrs R kann jedoch durch ein iteratives Vorgehen und einfache messtechnische Maßnahmen verbessert werden. Gemäß einer Ausführungsform sind zusätzlich zum auslaufseitigen Wanddickenmessgerät zwei - vorzugsweise berührungslos arbeitende - Geschwindigkeitsmessgeräte 21, 22 zum einen auf der Einlaufseite des Streckreduzierwalzwerkes 1 und zum anderen auf der Auslaufseite unmittelbar vor und hinter dem Streckreduzierwalzwerk 1 aufgebaut, vgl. Figur 1. Derartige Messgeräte sind vergleichsweise kostengünstig und einfach in Unterhalt und Wartung. Die Messwerte beider Geschwindigkeitsmessgeräte 21, 22 werden zeitsynchron einem Messdatenspeicher der Steuereinrichtung 2 zugeführt. Zweck der Geschwindigkeitsmessgeräte 21, 22 ist eine genaue Erfassung des Materialflusses durch das Streckreduzierwalzwerk 1.

Das auslaufseitige Wanddickenmessgerät 20 stellt seinerseits der Steuereinrichtung 2 ein abschnittsweises Wanddickenprofil des Rohres R zur Verfügung, in dem für kleine Rohrabschnitte j der Länge $l_j$ eine mittlere und innerhalb des Abschnittes j als konstant angenommene Wanddicke $s_j$ angegeben wird, vgl. Figur 2.

Gemäß dem vorgeschlagenen Verfahren wird nun zunächst die zeitliche Konstanz der Walzendrehzahlen untersucht. Für jedes Walzgerüst 10 wird die mittlere Walzendrehzahl während des Walzens eines Rohres R bestimmt:

$$\overline{n_i^{ges}} = \frac{1}{t_{ges}} \int_0^{t_{ges}} (n_i(t)) dt \qquad (2)$$

Dabei bedeuten $\overline{n_i^{ges}}$ die mittlere Walzendrehzahl des i-ten Walzgerüsts 10 während des Walzens, $n_i(t)$ die Walzendrehzahl des i-ten Walzgerüsts 10 zum Zeitpunkt $t$ und $t_{ges}$ die gesamte Walzzeit für das Rohr R.

Die zur Bildung des Mittelwertes notwendigen aktuellen Walzendrehzahlen werden von der Steuereinrichtung 2 beispielsweise aus dem Datenspeicher der Antriebsmotorregelung entnommen.

Als nächster Schritt untersucht das System die größten Abweichungen der Walzendrehzahlen eines Walzgerüsts 10 vom jeweiligen Mittelwert:

$$\Delta_i = \left[ \frac{\max(n_i(t))|_0^{t_{ges}} - \min(n_i(t))|_0^{t_{ges}}}{\overline{n_i^{ges}}} \right] \qquad (3)$$

Ist dieser Wert kleiner als eine untere Toleranzgrenze, beispielsweise 1%, wird angenommen, dass die Walzendrehzahlen während des Walzens hinreichend konstant waren, und es kann nun für jeden Rohrabschnitt der Länge $l_j$ und der Wanddicke $s_{rj}$ die umgekehrte Berechnung der Luppenwanddicke $s_{lj}$ gestartet werden:

$$s_{lj} = F^{-1}(\overline{n_i^{ges}}, s_{rj}) \qquad (4)$$

Sofern die Walzendrehzahlen eine unzulässige Änderungsspannbreite hatten, wird eine schrittweise Aufteilung des Drehzahlverlaufs in zeitliche Abschnitte vorgenommen und zwar solange, bis in den Teilbereichen die aktuellen Drehzahlen nur noch geringfügig von der mittleren Drehzahl abweichen, d.h. das oben vorgeschlagene Kriterium gemäß Gleichung (3) nach Möglichkeit erfüllt ist.

Dazu wird nun folgendermaßen vorgegangen:

- Aus dem auslaufseitigen Rohrwanddickenprofil wird eine mittlere Rohrwanddicke für das gesamte Rohr R gebildet, z.B. nach folgendem Ansatz:

$$\overline{s_r{}^{ges}} = \frac{\sum_j (s_{rj} l_j)}{l_r{}^{ges}} \qquad (5)$$

Dabei bedeuten $l_j$ die Länge des gemessenen Rohrabschnittes j mit der Wanddicke $s_{rj}$ und $l_r^{ges}$ die Gesamtlänge des Rohres.

Mit dieser mittleren Rohrwanddicke wird nun im ersten Ansatz eine mittlere Luppenwanddicke mit Hilfe der genannten Umkehrfunktion und den mittleren Walzendrehzahlen gebildet:

$$\overline{s_l{}^{ges}} = F^{-1}(\overline{n_i{}^{ges}}, \overline{s_r{}^{ges}}) \qquad (6)$$

Diese mittlere Luppenwanddicke ist zwar möglicherweise fehlerbehaftet, wird aber als Startwert zur weiteren Lösungsverfeinerung benutzt.

- Rohr R und Luppe werden jeweils in die gleiche Anzahl äquivalenter Teilvolumina unterteilt. Für das Rohr R können unmittelbar die Messwerte der auslaufseitigen Wanddickenmessung verwendet werden:

$$V_k = \sum_{j=m}^{n} \left( \pi (D_r - s_{rj}) s_{rj} l_j \right) \qquad (7)$$

Dabei bedeuten $V_k$ das $k$-te Teilvolumen zwischen den Messwertabschnitten $m$ bis $n$ und $D_r$ der Rohrdurchmesser.

Für die Luppe wird das zugehörige Teilvolumen mit Hilfe der im ersten Schritt näherungsweise ermittelten Luppenwanddicke gebildet:

$$V_k = \sum_{j=m}^{n} \left( \pi (D_r - s_{rj}) s_{rj} l_j \right) \qquad (8)$$

Hierbei sind $x_n$, $x_m$ Längenkoordinaten auf der Luppe und $D_l$ der Luppendurchmesser.

Durch das einlaufseitige Geschwindigkeitsmessgerät 21 kann man nun den Zeitpunkt $t_m$ bestimmen, an dem der Luppenabschnitt bzw. das Teilvolumen $V_k$ zwischen den Längskoordinaten $x_n$ - $x_m$ das Streckreduzierwalzwerk 1 betreten hat. Darüber hinaus kann man unter Zuhilfenahme der Messwerte des auslaufseitigen Wanddickenmessgerätes 20 und des auslaufseitigen Geschwindigkeitsmessgerätes 22 den Zeitpunkt $t_n$ bestimmen, an dem das Teilvolumen $V_k$ das Streckreduzierwalzwerk verlassen hat. Da bei der Umformung metallischer Werkstoffe das Gesetz der Volumenkonstanz gilt, kann durch Betrachtung der Volumina einem einlaufseitigen Luppenabschnitt eindeutig ein auslaufseitiger Rohrabschnitt zugeordnet werden.

- Im nächsten Schritt wird die mittlere Wanddicke des Rohres R im Teilvolumen bestimmt:

$$\overline{d_r{}^k} = \frac{\sum_{j=m}^n (d_{rj} l_j)}{\sum_{j=m}^n l_j}$$

(9)

Anschließend wird für jedes Walzgerüst 10 dessen mittlere Drehzahl während des Durchlaufs des Teilvolumens $V_k$ bestimmt:

$$\overline{n_i{}^k} = \frac{1}{(t_n - t_m)} \int_{t_m}^{t_n} (n_i(t))dt$$

(10)

Für jeden der Abschnitte *k* wird nun geprüft, ob die Drehzahlen innerhalb dieses Abschnittes hinreichend konstant waren. Es wird analog des Fehlerkriteriums aus Gleichung (3) verfahren, nun aber nur für die Drehzahlabweichungen im Zeitabschnitt $t_m$ bis $t_n$. Zeitabschnitte, in denen die Abweichungen von den jeweiligen mittleren Drehzahlen zu hoch sind, werden gemäß dem in den Beziehungen (7) bis (10) dargestellten Verfahren weiter unterteilt. Diese Unterteilung kann wiederholt werden, bis keine Ergebnisverbesserung mehr zu erwarten ist.

- Abschließend erhält man eine Zuordnung jeder auslaufseitig gemessenen Rohrwanddicke zu einem Satz zugehöriger gemittelter Walzendrehzahlen, die entweder den tatsächlichen Drehzahlverlauf zum Zeitpunkt des Walzens des Rohrabschnittes entsprechend dem Fehlerkriterium (3) innerhalb einer zulässigen Schwankungsbreite repräsentieren oder deren Abweichung vom tatsächlichen Drehzahlverlauf nicht mehr verringert werden kann:

$$s_{rj} \rightarrow \overline{n_i{}^k}$$

(11)

Mit dieser Zuordnung wird nun über die Umkehrfunktion ein Luppenwanddickenverlauf berechnet:

$$s_{lj} = F^{-1}\left(\overline{n_i{}^k}, s_{rj}\right)$$

(12)

Das dargelegte Verfahren ist lediglich beispielhaft und kann modifiziert werden, soweit es eine Steuerung eines oder mehrerer der Walzgerüste 10 unter Berücksichtigung der ermittelten einlaufseitigen Wanddicken ermöglicht.
Soweit anwendbar, können alle einzelnen Merkmale, die in den Ausführungsbeispielen dargelegt sind, miteinander kombiniert und/oder ausgetauscht werden, ohne den durch die Ansprüche definierten Schutzumfang der Erfindung zu verlassen.

Bezugszeichenliste

| | |
|---|---|
| 1 | Streckreduzierwalzwerk |
| 2 | Steuereinrichtung |
| 10 | Walzgerüst |
| 20 | Wanddickenmessgerät |
| 21 | Einlaufseitiges Geschwindigkeitsmessgerät |
| 22 | Auslaufseitiges Geschwindigkeitsmessgerät |
| | |
| R | Rohr |
| F | Förderrichtung |
| $s_l$ | Einlaufseitige Wanddicke des Rohrs |
| $s_{l\_t}$ | Theoretisch ermittelte einlaufseitige Wanddicke des Rohrs |
| $s_r$ | Auslaufseitige Wanddicke des Rohrs |

**Patentansprüche**

1. Steuereinrichtung (2) zum Steuern eines Streckreduzierwalzwerks (1) für das Walzen von Rohren (R), das mehrere in einer Förderrichtung (F) der Rohre (R) hintereinander angeordnete Walzgerüste (10) und zumindest ein auslaufseitiges Wanddickenmessgerät (20) aufweist, das eingerichtet ist, um auslaufseitige Wanddicken ($s_r$) von aus dem letzten Walzgerüst (10) austretenden Rohren (R) zu messen, wobei die Steuereinrichtung (2) eingerichtet ist, um Messdaten, die eine oder mehrere auslaufseitige Wanddicken ($s_r$) eines aus dem letzten Walzgerüst (10) austretenden Rohrs (R) kennzeichnen, vom Wanddickenmessgerät (20) zu empfangen,
**dadurch gekennzeichnet, dass**
die Steuereinrichtung (2) eingerichtet ist, um aus den empfangenen Messdaten eine oder mehrere einlaufseitige Wanddicken ($s_{l\_t}$), vorzugsweise ein einlaufseitiges Wanddickenprofil, des Rohrs (R) im Zustand vor dem Eintritt in das erste Walzgerüst (10) zu ermitteln, vorzugsweise zu berechnen, und ein oder mehrere der Walzgerüste (10) unter Berücksichtigung der ermittelten einlaufseitigen Wanddicken ($s_{l\_t}$) zu steuern.

2. Steuereinrichtung (2) nach Anspruch 1, **dadurch gekennzeichnet, dass** diese eingerichtet ist, um aus den ermittelten einlaufseitigen Wanddicken ($s_{l\_t}$) eine Abweichung von einem oder mehreren Sollwerten zu bestimmen.

3. Steuereinrichtung (2) nach Anspruch 1 oder 2, **dadurch gekennzeichnet, dass** die Steuerung des einen oder der mehreren Walzgerüste (10) zumindest eine Drehzahlregulierung von Arbeitswalzen derselben umfasst.

4. Steuereinrichtung (2) nach einem der vorigen Ansprüche, **dadurch gekennzeichnet, dass** diese eingerichtet ist, um die ermittelten einlaufseitigen Wanddicken ($s_{l\_t}$) für die Wanddickensteuerung eines oder mehrerer nachfolgender Rohre (R) zu verwenden.

5. Steuereinrichtung (2) nach einem der vorigen Ansprüche, **dadurch gekennzeichnet, dass** diese eingerichtet ist, um aus den ermittelten einlaufseitigen Wanddicken ($s_{l\_t}$) eine Prognose über Wanddicken, vorzugsweise das Wanddickenprofil, nachfolgender Rohre (R) zu erstellen, wobei die Erstellung der Prognose vorzugsweise eine Analyse auf zyklisch wiederkehrende und/oder statistische Regelmäßigkeiten umfasst.

6. Steuereinrichtung (2) nach einem der vorigen Ansprüche, **dadurch gekennzeichnet, dass** diese ferner eingerichtet ist, um die ermittelten einlaufseitigen Wanddicken ($s_{l\_t}$) mit den gemessenen auslaufseitigen Wanddicken ($s_r$) zu vergleichen.

7. Steuereinrichtung (2) nach einem der vorigen Ansprüche, **dadurch gekennzeichnet, dass** diese eingerichtet ist, um die ermittelten einlaufseitigen Wanddicken ($s_{l\_t}$) mittels eines gemessenen einlaufseitigen Wanddickenmittelwerts zu korrigieren, wobei ein solcher Wanddickenmittelwert vorzugsweise durch Messung des Gewichts und/oder der Länge und/oder des Durchmessers eines oder mehrerer einlaufender Rohre (R) ermittelt wird.

8. Streckreduzierwalzwerk (1) zum Walzen von Rohren (R), das mehrere in einer Förderrichtung (F) der Rohre (R) hintereinander angeordnete Walzgerüste (10), zumindest ein auslaufseitiges Wanddickenmessgerät (20), das eingerichtet ist, um auslaufseitige Wanddicken ($s_r$) von aus dem letzten Walzgerüst (10) austretenden Rohren (R) zu messen, und eine Steuereinrichtung (2) nach einem der vorigen Ansprüche aufweist.

9. Streckreduzierwalzwerk (1) nach Anspruch 8, **dadurch gekennzeichnet, dass** das Streckreduzierwalzwerk (1) ferner ein einlaufseitiges Wanddickenmessgerät aufweist, das eingerichtet ist, um einlaufseitige Wanddicken (d1) von in das erste Walzgerüst (10) eintretenden Rohren (R) zu messen, wobei die Steuereinrichtung (2) eingerichtet ist, um eine oder mehrere gemessene einlaufseitige Wanddicken ($s_l$) mit den ermittelten einlaufseitigen Wanddicken ($s_l$) zu vergleichen, und vorzugsweise ferner eingerichtet ist, um ein oder mehrere der Walzgerüste (10) unter Berücksichtigung des Vergleichsresultats zu steuern und/oder eine Fehlfunktion des Streckreduzierwalzwerks (1) zu detektieren.

10. Verfahren zum Steuern eines Streckreduzierwalzwerks (1) für das Walzen von Rohren (R), das mehrere in einer Förderrichtung (F) der Rohre (R) hintereinander angeordnete Walzgerüste (10) und zumindest ein auslaufseitiges Wanddickenmessgerät (20) aufweist, das eingerichtet ist, um auslaufseitige Wanddicken ($s_r$) von aus dem letzten Walzgerüst (10) austretenden Rohren (R) zu messen, wobei das Verfahren aufweist:

Messen von einer oder mehreren auslaufseitigen Wanddicken ($s_r$) eines Rohrs (R) mittels des Wanddickenmessgeräts (20);

**gekennzeichnet durch**

Ermitteln, vorzugsweise Berechnen, einer oder mehrerer einlaufseitiger Wanddicken ($s_{l\_t}$), vorzugsweise eines einlaufseitigen Wanddickenprofils, des Rohrs (R) im Zustand vor dem Eintritt in das erste Walzgerüst (10) aus den gemessenen auslaufseitigen Wanddicken ($s_r$); und

Steuern eines oder mehrerer der Walzgerüste (10) unter Berücksichtigung der ermittelten einlaufseitigen Wanddicken ($s_{l\_t}$).

11. Verfahren nach Anspruch 10, **dadurch gekennzeichnet, dass** aus den ermittelten einlaufseitigen Wanddicken ($s_{l\_t}$) eine Abweichung von einem oder mehreren Sollwerten bestimmt wird.

12. Verfahren nach Anspruch 10 oder 11, **dadurch gekennzeichnet, dass** die ermittelten einlaufseitigen Wanddicken ($s_{l\_t}$) für die Wanddickensteuerung eines oder mehrerer nachfolgender Rohre (R) verwendet werden.

13. Verfahren nach einem der Ansprüche 10 bis 12, **dadurch gekennzeichnet, dass** aus den ermittelten einlaufseitigen Wanddicken ($s_{l\_t}$) eine Prognose über die Wanddicken, vorzugsweise das Wanddickenprofil, nachfolgender Rohre (R) erstellt wird und die Erstellung der Prognose vorzugsweise eine Analyse auf zyklisch wiederkehrende und/oder statistische Regelmäßigkeiten umfasst.

14. Verfahren nach einem der Ansprüche 10 bis 13, **dadurch gekennzeichnet, dass** die ermittelten einlaufseitigen Wanddicken ($s_{l\_t}$) mit den gemessenen auslaufseitigen Wanddicken ($s_r$) verglichen werden.

15. Verfahren nach einem der Ansprüche 10 bis 14, **dadurch gekennzeichnet, dass** die ermittelten einlaufseitigen Wanddicken ($s_{l\_t}$) mittels eines gemessenen einlaufseitigen Wanddickenmittelwerts korrigiert werden, wobei ein solcher Wanddickenmittelwert vorzugsweise durch Messung des Gewichts und/oder der Länge und/oder des Durchmessers eines oder mehrerer einlaufender Rohre (R) ermittelt wird.

**Claims**

1. Control device (2) for controlling a stretch-reducing rolling mill (1) for the rolling of tubes (R), which comprises a plurality of roll stands (10) arranged in succession in a conveying direction (F) of the tubes (R) and at least one wall thickness measuring instrument (20) which is at the outlet side and which is arranged to measure outlet-side wall thicknesses ($s_r$) of tubes (R) exiting the last roll stand (10), wherein the control device (2) is arranged to receive measurement data, which characterise one or more outlet-side wall thicknesses ($s_r$) of a tube (R) exiting the last roll stand (10), from the wall thickness measuring instrument (20),
**characterised in that**
the control device (2) is arranged to determine, preferably calculate, from the received measurement data one or more inlet-side wall thicknesses ($s_{l\_t}$), preferably an inlet-side wall thickness profile, of the tube (R) in the state prior to entry into the first roll stand (10) and to control one or more of the roll stands (10) with consideration of the determined inlet-side wall thicknesses ($s_{l\_t}$).

2. Control device (2) according to claim 1, **characterised in that** this is arranged to determine a deviation of one or more target values from the determined inlet-side wall thicknesses.

3. Control device (2) according to claim 1 or 2, **characterised in that** the control of the one or more roll stands (10) comprises at least one rotational speed regulation of work rolls thereof.

4. Control device (2) according to any one of the preceding claims, **characterised in that** this is arranged to use the determined inlet-side wall thicknesses ($s_{l\_t}$) for the wall thickness control of one or more following tubes (R).

5. Control device (2) according to any one of the preceding claims, **characterised in that** this is arranged to create from the determined inlet-side wall thicknesses ($s_{l\_t}$) a prognosis with respect to wall thicknesses, preferably the wall thickness profile, of following tubes (R), wherein the creation of the prognosis preferably comprises an analysis with respect to cyclically recurrent and/or statistical regularities.

6. Control device (2) according to any one of the preceding claims, **characterised in that** this is further arranged to compare the determined inlet-side wall thicknesses ($s_{l\_t}$) with the measured outlet-side wall thicknesses ($s_r$).

7. Control device (2) according to any one of the preceding claims, **characterised in that** this is arranged to correct the determined inlet-side wall thicknesses ($s_{l\_t}$) by means of a measured inlet-side wall thickness mean value, wherein such a wall thickness mean value is preferably determined by measuring the weight and/or the length and/or the diameter of one or more entering tubes (R).

8. Stretch-reducing rolling mill (1) for the rolling of tubes (R), which comprises a plurality of roll stands (10) arranged in succession in a conveying direction (F) of the tubes (R), at least one outlet-side wall thickness measuring instrument (20) arranged to measure outlet-side wall thicknesses ($s_r$) of tubes (R) exiting the last roll stand (10) and a control device (2) according to any one of the preceding claims.

9. Stretch-reducing rolling mill (1) according to claim 8, **characterised in that** the stretch-reducing rolling mill (1) further comprises an inlet-side wall thickness measuring instrument arranged to measure inlet-side wall thicknesses (d1) of tubes (R) entering the first roll stand (10), wherein the control device (2) is arranged to compare one or more measured inlet-side wall thicknesses ($s_l$) with the determined inlet-side wall thickness ($s_l$) and preferably is further arranged to control one or more of the roll stands (10) with consideration of the comparison result and/or to detect a faulty function of the stretch-reducing rolling mill (1).

10. Method of controlling a stretch-reducing rolling mill (1) for the rolling of tubes (R), which comprises a plurality of roll stands (10) arranged in succession in a conveying direction (F) of the tubes (R) and at least one outlet-side wall thickness measuring instrument (20) arranged to measure outlet-side wall thicknesses ($s_r$) of tubes (R) exiting the last roll stand (10), wherein the method comprises:

   measuring one or more outlet-side wall thicknesses ($s_r$) of a tube (R) by means of the wall thickness measuring instrument (20);
   **characterised by**
   determining, preferably calculating, one or more inlet-side wall thicknesses ($s_{l\_t}$), preferably an inlet-side wall thickness profile, of the tube (R) in the state prior to entry into the first roll stand (10) from the measured outlet-side wall thicknesses ($s_r$); and
   controlling one or more of the roll stands (10) with consideration of the determined inlet-side wall thicknesses (($s_{l\_t}$).

11. Method according to claim 10, **characterised in that** a deviation from one or more target values is determined from the determined inlet-side wall thicknesses ($s_{l\_t}$).

12. Method according to claim 10 or 11, **characterised in that** the determined inlet-side wall thicknesses ($s_{l\_t}$) can be used for the wall thickness control of one or more following tubes (R).

13. Method according to any one of claims 10 to 12, **characterised in that** a prognosis with respect to the wall thicknesses, preferably the wall thickness profile, of following tubes (R) is created from the determined inlet-side wall thicknesses ($s_{l\_t}$) and the creation of the prognosis preferably comprises analysis with respect to cyclically recurrent and/or statistical regularities.

14. Method according to any one of claims 10 to 13, **characterised in that** the determined inlet-side wall thicknesses ($s_{l\_t}$) are compared with the measured outlet-side wall thicknesses ($s_r$).

15. Method according to any one of claims 10 to 14, **characterised in that** the determined inlet-side wall thicknesses ($s_{l\_t}$) are corrected by means of a measured inlet-side wall thickness mean value, wherein such a wall thickness mean value is determined preferably by measurement of the weight and/or length and/or the diameter of one or more entering tubes (R).

**Revendications**

1. Dispositif de commande (2) destiné à la commande d'un laminoir étireur-réducteur (1) pour le laminage de tubes (R), qui présente plusieurs cages de laminoir (10) qui sont disposées les unes derrière des autres dans une direction de transport (F) des tubes (R) et au moins un appareil de mesure de l'épaisseur de paroi (20) du côté de la sortie, qui est conçu pour mesurer, du côté de la sortie, des épaisseurs de parois ($s_r$) de tubes (R) qui quittent la dernière cage de laminoir (10) ; dans lequel le dispositif de commande (2) est conçu pour recevoir, à partir de l'appareil de mesure de l'épaisseur de paroi (20), des données de mesure qui caractérisent ladite une ou plusieurs épaisseurs de paroi ($s_r$), du côté de la sortie, d'un tube (R) qui quitte la dernière cage de laminoir (10) ;
**caractérisé**
**en ce que** le dispositif de commande (2) est conçu pour déterminer, de préférence pour calculer, à partir des données de mesure qui ont été reçues, une ou plusieurs épaisseurs de parois ($s_{l\_t}$) du côté de l'entrée, de préférence un profil d'épaisseur de paroi, du côté de l'entrée, du tube (R) dans l'état de ce dernier avant son entrée dans la première cage de laminoir (10), et pour commander une ou plusieurs des cages de laminoir (10) en prenant en compte les épaisseurs de parois ($s_{l\_t}$) qui ont été déterminées du côté de l'entrée.

2. Dispositif de commande (2) conformément à la revendication 1, **caractérisé en ce que** le dispositif en question est conçu pour identifier, à partir des épaisseurs de parois ($s_{l\_t}$) qui ont été déterminées du côté de l'entrée, une déviation par rapport à une ou plusieurs valeurs seuil.

3. Dispositif de commande (2) conformément à la revendication 1 ou 2, **caractérisé en ce que** la commande desdites une ou plusieurs cages de laminoir (10) comprend au moins une régulation de la vitesse de rotation des cylindres de travail des cages en question.

4. Dispositif de commande (2) conformément à l'une quelconque des revendications précédentes, **caractérisé en ce que** le dispositif en question est conçu pour utiliser les épaisseurs de parois ($s_{l\_t}$) qui ont été déterminées du côté de l'entrée pour le réglage de l'épaisseur de paroi d'un ou de plusieurs tubes (R) qui se suivent.

5. Dispositif de commande (2) conformément à l'une quelconque des revendications précédentes, **caractérisé en ce que** le dispositif en question est conçu pour, à partir des épaisseurs de parois ($s_{l\_t}$) qui ont été déterminées du côté de l'entrée, établir un pronostic en ce qui concerne les épaisseurs de paroi, de préférence en ce qui concerne le profil d'épaisseur de paroi, de tubes (R) qui se suivent ; dans lequel l'établissement du pronostic comprend de préférence une analyse de régularités statistiques et/ou récurrentes de manière cyclique.

6. Dispositif de commande (2) conformément à l'une quelconque des revendications précédentes, **caractérisé en ce que** le dispositif en question est en outre conçu pour comparer les épaisseurs de parois ($s_{l\_t}$) qui ont été déterminées du côté de l'entrée aux épaisseurs de parois ($s_r$) qui ont été mesurées du côté de la sortie.

7. Dispositif de commande (2) conformément à l'une quelconque des revendications précédentes, **caractérisé en ce que** le dispositif en question est conçu pour corriger les épaisseurs de parois ($s_{l\_t}$) qui ont été déterminées du côté de l'entrée au moyen d'une valeur moyenne d'épaisseur de paroi qui a été mesurée du côté de l'entrée ; dans lequel on détermine une telle valeur moyenne d'épaisseur de paroi de préférence par l'intermédiaire de la mesure du poids et/ou de la longueur et/ou du diamètre d'un ou de plusieurs tubes (R) du côté de l'entrée.

8. Laminoir étireur-réducteur (1) destiné au laminage de tubes (R), qui présente : plusieurs cages de laminoir qui sont disposées les unes derrière les autres dans une direction de transport (F) des tubes (R) ; au moins un appareil de mesure de l'épaisseur de paroi (20) du côté de la sortie, qui est conçu pour mesurer, du côté de la sortie, des épaisseurs de paroi ($s_r$) de tubes (R) qui quittent la dernière cage de laminoir (10) ; ainsi qu'un dispositif de commande (2) conformément à l'une quelconque des revendications précédentes.

9. Laminoir étireur-réducteur (1) conformément à la revendication 8, **caractérisé en ce que** le laminoir étireur-réducteur (1) présente en outre, du côté de l'entrée, un appareil de mesure de l'épaisseur de paroi, qui est conçu pour mesurer, du côté de l'entrée, des épaisseurs de parois (d1) de tubes (R) qui entrent dans la première cage de laminoir (10) ; dans lequel le dispositif de commande (2) est conçu pour comparer une ou plusieurs épaisseurs de parois ($s_l$) qui ont été mesurées du côté de l'entrée aux épaisseurs de parois ($s_l$) qui ont été déterminées du côté de l'entrée ; et de préférence en outre conçu pour commander une ou plusieurs des cages de laminoir (10) en prenant en compte le résultat de la comparaison et/ou pour détecter un dysfonctionnement du laminoir étireur-réducteur (1).

10. Procédé destiné à la commande d'un laminoir étireur-réducteur (1) pour le laminage de tubes (R), qui présente plusieurs cages de laminoir (10) qui sont disposées les unes derrière les autres dans une direction de transport (F) des tubes (R) et au moins un appareil de mesure de l'épaisseur de paroi (20) du côté de la sortie, qui est conçu pour mesurer, du côté de la sortie, des épaisseurs de parois ($s_r$) de tubes (R) qui quittent la dernière cage de laminoir (10) ; dans lequel le procédé présente le fait de :

mesurer, du côté de la sortie, une ou plusieurs épaisseurs de parois ($s_r$) d'un tube (R) au moyen de l'appareil de mesure de l'épaisseur de paroi (20) ;

**caractérisé par** le fait de :

déterminer, de préférence calculer, à partir des données de mesure qui ont été mesurées du côté de la sortie, une ou plusieurs épaisseurs de parois ($s_{l\_t}$) du côté de l'entrée, de préférence un profil d'épaisseur de paroi, du côté de l'entrée, du tube (R) dans l'état de ce dernier avant son entrée dans la première cage de laminoir (10) ; et

commander une ou plusieurs des cages de laminoir (10) en prenant en compte les épaisseurs de parois ($s_{l\_t}$) qui ont été déterminées du côté de l'entrée.

**11.** Procédé conformément à la revendication 10, **caractérisé en ce que** l'on identifie, à partir des épaisseurs de parois ($s_{l\_t}$) qui ont été déterminées du côté de l'entrée, une déviation par rapport à une ou plusieurs valeurs seuil.

**12.** Procédé conformément à la revendication 10 ou 11, **caractérisé en ce que** l'on utilise les épaisseurs de parois ($s_{l\_t}$) qui ont été déterminées du côté de l'entrée pour le réglage de l'épaisseur de paroi d'un ou de plusieurs tubes (R) qui se suivent.

**13.** Procédé conformément à l'une quelconque des revendications 10 à 12, **caractérisé en ce que** l'on établit, à partir des épaisseurs de parois ($s_{l\_t}$) qui ont été déterminées du côté de l'entrée, un pronostic en ce qui concerne les épaisseurs de paroi, de préférence en ce qui concerne le profil d'épaisseur de paroi, de tubes (R) qui se suivent ; et l'établissement du pronostic comprend de préférence une analyse de régularités statistiques et/ou récurrentes de manière cyclique.

**14.** Procédé conformément à l'une quelconque des revendications 10 à 13, **caractérisé en ce que** l'on compare les épaisseurs de parois ($s_{l\_t}$) qui ont été déterminées du côté de l'entrée aux épaisseurs de parois ($s_r$) qui ont été mesurées du côté de la sortie.

**15.** Procédé conformément à l'une quelconque des revendications 10 à 14, **caractérisé en ce que** l'on corrige les épaisseurs de parois ($s_{l\_t}$) qui ont été déterminées du côté de l'entrée au moyen d'une valeur moyenne d'épaisseur de paroi qui a été mesurée du côté de l'entrée ; dans lequel on détermine une telle valeur moyenne d'épaisseur de paroi de préférence par l'intermédiaire de la mesure du poids et/ou de la longueur et/ou du diamètre d'un ou de plusieurs tubes (R) à l'entrée.

Fig. 1

EP 3 863 777 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2947233 A1
- US 3496745 A

- DE 3819571 A1

**In der Beschreibung aufgeführte Nicht-Patentliteratur**

- **H. BILLER.** Das Reduzieren von Rohren, Theorie und Anwendung. *Herstellung von Rohren'', Düsseldorf,* 1975, 48-63